# EUROPEAN PATENT SPECIFICATION

(11) **EP 1 751 416 B1**
(45) Date of publication and mention of the grant of the patent: **27.10.2010**
(21) Application number: 05728318.6
(22) Date of filing: 29.03.2005
(51) Int. Cl.: F02M 25/07

(54) **ARRANGEMENT FOR RECIRCULATION OF EXHAUST GASES OF A SUPER-CHARGED INTERNAL COMBUSTION ENGINE**
ANORDNUNG ZUR RÜCKFÜHRUNG VON ABGASEN EINES AUFGELADENEN VERBRENNUNGSMOTORS
AGENGEMENT POUR RECIRCULATION DE GAZ D'ECHAPPEMENT D'UN MOTEUR A COMBUSTION INTERNE SUPERCHARGE

(30) Priority: 31.03.2004 SE 0400856
(43) Date of publication of application: 14.02.2007
(73) Proprietor: Scania CV Aktiebolag, 151 87 Södertälje (SE)
(72) Inventor: PELZ, Magnus, S-146 54 Tullinge (SE); SKOG, Henrik, Northamptonshire, NN3 5JR (GB)
(86) International application number: PCT/SE2005/000446
(87) International publication number: WO 2005/095779

(56) References cited:
- EP-A1- 0 596 855
- EP-A2- 1 091 113
- US-B2- 6 601 387
- US-B2- 6 694 736

## Description

### BACKGROUND TO THE INVENTION, AND STATE OF THE ART

The present invention relates to an arrangement for recirculation of exhaust gases in a supercharged combustion engine according to the preamble of claim 1.

The technique known as EGR (Exhaust Gas Recirculation) is a known way of leading part of the exhaust gases from a combustion process in a combustion engine back, via a return line, to an inlet line for supply of air to the combustion engine. A mixture of air and exhaust gases is thus supplied via the inlet line to the engine's cylinders in which the combustion takes place. The addition of exhaust gases to the air causes a lower combustion temperature resulting inter alia in a reduced content of nitrogen oxides NOₓ in the exhaust gases. This technique is applied in both Otto engines and diesel engines.

The amount of air which can be supplied to a supercharged combustion engine depends on the pressure of the air but also on the temperature of the air. Supplying the largest possible amount of air to the combustion engine therefore entails cooling the compressed air in a charge air cooler before it is led to the combustion engine. The compressed air is cooled in the charge air cooler by ambient air flowing through the charge air cooler. The compressed air can thus be cooled to a temperature which is only a few degrees higher than the temperature of the surroundings. In cases where EGR technology is used, the returned exhaust gases also need cooling. This is achieved by means of a so-called EGR cooler. An EGR cooler is usually connected to the combustion engine's cooling system so that the exhaust gases are cooled in the EGR cooler by the circulating coolant in the cooling system. The EGR cooler is thus subject to the limitation that the exhaust gases cannot be cooled to a lower temperature than the temperature of the coolant in the cooling system. The cooled exhaust gases are therefore usually at a higher temperature than the cooled compressed air when they are put into the inlet line to the combustion engine. The mixture of exhaust gases and air being led to the combustion engine will therefore be at a higher temperature than the compressed air led into a supercharged combustion engine which is not provided with recirculation of exhaust gases. The performance of a supercharged combustion engine equipped with EGR is therefore somewhat inferior to that of a supercharged combustion engine not equipped with EGR.

EP-A-0596855 discloses an arrangement intended for an internal combustion engine with an exhaust gas turbocharger with a heat exchanger arranged in the flow path to an inlet duct and with an exhaust gas recirculation valve in an exhaust-gas recirculation line.

EP-A-1091113 discloses an arrangement for recirculation of exhaust gases of a super-charged internal combustion engine comprising an ambient air-cooled charge air cooler and an exhaust cooler connected to the engine cooling system.

### SUMMARY OF THE INVENTION

The object of the invention is to provide an arrangement which effects recirculation of exhaust gases in a supercharged combustion engine in such a way that the recirculation of exhaust gases does not result in the combustion engine's performance being inferior to that of a corresponding combustion engine not provided with recirculation of exhaust gases.

This object is achieved with the arrangement of the kind mentioned in the introduction which is characterised by the features indicated in the characterising part of claim 1. The exhaust gases are thus mixed with the compressed air before they are together cooled in a cooler by a cooling medium which is at a temperature substantially corresponding to the temperature of the surroundings. This means that the mixture of exhaust gases and compressed air being led to the combustion engine is brought to a temperature corresponding to that of the compressed air supplied to a combustion engine not equipped with EGR. The performance of a combustion engine with an arrangement according to the present invention can therefore correspond to that of a combustion engine not equipped with EGR.

According to the present invention, said first medium is ambient air. Ambient air is at all times an available medium and needs no complicated equipment to cause it to flow through the first cooler. Using ambient air as cooling medium makes it possible for the exhaust gases to be cooled down to a level close to the temperature of the ambient air. The same cooling medium is therefore used in the first cooler as in a conventional charge air cooler for cooling of compressed air. This means that exhaust gases can be cooled to the same level as the compressed air in a conventional charge air cooler. The arrangement is used with advantage in a vehicle which is powered by the combustion engine. The result is a natural flow of ambient air through the first cooler during operation of the vehicle. A cooling fan may possibly be incorporated to guarantee the air flow through the first cooler.

According to the present invention, the arrangement comprises a second cooler adapted to cooling the exhaust gases in the return line. A gaseous cooling medium such as air is usually not particularly effective as regards carrying heat away in a cooler. There are substantially more effective coolers than those which are cooled by air. It is therefore advantageous to use such a more effective second cooler for cooling the hot exhaust gases as a first step before they are cooled by the first cooler. Said second cooler is cooled by a liquid medium. A liquid medium usually provides much more effective cooling than a gaseous medium. A liquid-cooled cooler which has the same cooling capacity as an air-cooled cooler can therefore be made considerably smaller. When such a liquid-cooled second cooler is incorporated in the return line, the temperature of the exhaust gases can be lowered in an effective manner as a first step. A significantly lower cooling capacity is therefore required of the first cooler and the latter can therefore be made significantly smaller. The liquid medium is adapted to circulating in a cooling system which is also adapted to cooling the combustion engine. In this case the existing coolant in the vehicle's cooling system is thus used for cooling the exhaust gases as a first step. Although the temperature of the coolant will be higher than the temperature of the ambient air, the result is a relatively large difference between the temperature of the coolant and the temperature of the exhaust gases. The coolant in said second cooler can thus provide effective cooling of the exhaust gases.

According to the present invention, said first cooler is situated close to a cooler for cooling the coolant in the cooling system. The first cooler is situated in a region of the vehicle which is already designed to cater for a throughflow of ambient air. In this case a cooling fan may possibly be incorporated with a larger capacity to provide effective cooling both of the coolant in the cooling system and of the mixture of exhaust gases and compressed air in the first cooler.

According to another preferred embodiment of the present invention, the arrangement comprises an EGR valve incorporated in the return line. With such an EGR valve in the return line, the exhaust gas flow can be shut off as necessary. To some extent the EGR valve can also be used for controlling the amount of exhaust gases returned via the return line. A control unit is usually adapted to controlling the EGR valve. The control unit controls the EGR valve on the basis of information about the current operating state of the combustion engine. The control unit may be a computer unit provided with suitable software.

According to another preferred embodiment of the present invention, the arrangement comprises a turbine driven by the exhaust gases in the exhaust line which are not led into the return line, and a compressor driven by said turbine so that it compresses the air in the inlet line. The above atmospheric pressure of the exhaust gases is thus utilised for compressing the air in the inlet line. The combustion engine may be a diesel engine or an Otto engine. In the case of supercharged Otto engines it is relatively easy to add the recirculating exhaust gases to the air, since the exhaust gases in substantially all operating situations will be at a higher pressure than the compressed air in the inlet line. In the case of supercharged diesel engines, the pressure of the exhaust gases in certain operating situations will be lower than that of the compressed air. In such operating situations it is therefore not possible to mix the exhaust gases directly with the air in the inlet line without special auxiliary means. Such auxiliary means is a so-called venturi which may be situated in the inlet line close to the latter's connection to the return line. With such a venturi the static pressure of the air in the inlet line can be reduced locally at the connection to the return line.

### BRIEF DESCRIPTION OF THE DRAWINGS

A preferred embodiment of the invention is described below by way of example with reference to the attached drawing, in which:
- Fig. 1: depicts an embodiment of an arrangement for recirculation of exhaust gases in a supercharged diesel engine and
- Fig. 2: depicts schematically the positioning of a charge air cooler according to the present invention.

### DETAILED DESCRIPTION OF A PREFERRED EMBODIMENT OF THE INVENTION

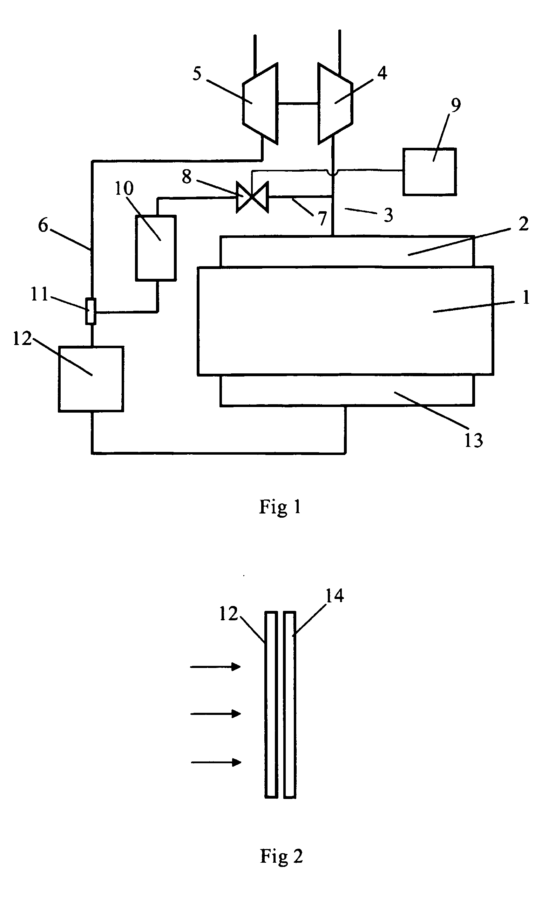

Fig. 1 depicts schematically an arrangement for recirculation of exhaust gases in a supercharged combustion engine. The combustion engine is in this case a diesel engine 1. Such recirculation is usually called EGR (Exhaust Gas Recirculation). Adding exhaust gases to the compressed air which is led to the engine's cylinders lowers the combustion temperature and hence also the content of nitrogen oxides (NOₓ) which are formed during the combustion processes. The diesel engine 1 may for example be intended to power a heavy vehicle. The exhaust gases from the cylinders of the diesel engine 1 are led via an exhaust manifold 2 to an exhaust line 3. The exhaust gases in the exhaust line 3, which are at above atmospheric pressure, are led to a turbine 4. The turbine 4 is thus provided with driving power which is transferred, via a connection, to a compressor 5. The compressor 5 compresses the air which is led into the inlet line 6.

A return line 7 is intended to cater for recirculation of part of the exhaust gases from the exhaust line 3. The return line 7 comprises a valve in the form of an EGR valve 8 by which the exhaust gas flow in the return line 7 can be shut off as necessary. The EGR valve 8 can be used for controlling the amount of exhaust gases led via the return line 7 to the inlet line 6. A control unit 9 is adapted to controlling the EGR valve 8. The control unit 9 controls the EGR valve 8 on the basis of information about the current operating state of the diesel engine. The return line 7 also comprises an EGR cooler 10 for cooling the recirculating exhaust gases before they are mixed with the compressed air in the inlet line 6. The amount of air and exhaust gases which can be supplied to the diesel engine 1 depends on the pressure of the air and the exhaust gases, but also on the latter's temperature. It is therefore important to provide effective cooling of the recirculating exhaust gases. The exhaust gases which are circulated through the EGR cooler 10 are cooled by the coolant in the vehicle's existing cooling system, which is also intended to cool the diesel engine 1. In the case of supercharged diesel engines 1, the pressure of the exhaust gases will in many cases be lower than the pressure of the compressed air in the inlet line. In such operating situations it is not possible to mix the returned exhaust gases from the diesel engine 1 directly with the compressed air in the inlet line 6 without auxiliary means. To this end it is possible to use, for example, a venturi 11. If the combustion engine is instead a supercharged Otto engine, the exhaust gases can be led directly into the inlet line 6, since the exhaust gases of an Otto engine in substantially all operating situations will be at a higher pressure than the compressed air in the inlet line 6.

A charge cooler 12 is arranged in the inlet line 6. The charge cooler 12 is cooled by ambient air. The compressed air and the exhaust gases mixed in the inlet line 6 are intended to be led together through the charge cooler 12 in order to be cooled. Fig. 2 depicts schematically a view from above of the charge cooler 12. In this case it is situated close to a conventional cooler 14 for cooling the coolant in the vehicle's cooling system. The charge cooler 12 and the cooler 14 are arranged substantially in parallel at a distance from one another. The exhaust gases and the compressed air in the charge cooler 12 and the coolant in the cooler 14 are cooled in this case by ambient air which flows first through the charge cooler 12 before flowing through the cooler 14. When the mixture of exhaust gases and compressed air has been cooled in the charge cooler 12, it is led via a manifold 13 to the respective cylinders of the diesel engine 1.

During operation of the diesel engine 1, the exhaust gases drive the turbine 4. The turbine 4 is thus provided with driving power which drives a compressor 5. The compressor 5 compresses the air which is led into the inlet line 6. In most operating states of the diesel engine 1 the control unit 9 keeps the EGR valve 8 open so that part of the exhaust gases in the exhaust line 3 is led into the return line 7. In this situation the exhaust gases are at a temperature of about 600-700°C. When the exhaust gases in the return line 7 reach the EGR cooler 10 they undergo a first step of cooling. At this stage the exhaust gases are cooled by the coolant in the cooling system. The exhaust gases can thus be cooled effectively so that they are at a considerably reduced temperature when they leave the EGR cooler 10. The EGR cooler 10 is subject, however, to the limitation that it can at best cool the exhaust gases to a temperature corresponding to the temperature of the coolant. The temperature of the coolant in the cooling system may vary but in normal operation is usually within the range 80-100°C.

In supercharged diesel engines 1 in certain operating situations the pressure of the exhaust gases will thus be lower than the pressure of the compressed air in the inlet line 6. The venturi 11 can be used to reduce the static pressure of the air in the inlet line 6 locally, close to the return line 7, so that the exhaust gases can be led into and mixed with the compressed air in the inlet line 6. The mixture of exhaust gases and compressed air is led thereafter together through the charge cooler 12. The mixture of exhaust gases and compressed air is cooled together in the charge cooler 12 by the ambient air which flows through the charge cooler 12. The size of the charge air cooler 12 is with advantage such that the mixture of exhaust gases and compressed air is cooled down to a temperature which only exceeds the temperature of the surroundings by a few degrees. After the charge cooler 12, the mixture is led to the respective cylinders of the diesel engine 1. In contrast to conventional EGR technology, the exhaust gases in this case are also subjected to a second step of cooling. The exhaust gases are thus mixed with the compressed air before they are together cooled in the charge cooler 12 by ambient air as cooling medium. The mixture of exhaust gases and compressed air being led to the diesel engine 1 can therefore be brought to a temperature corresponding to that of the compressed air which is supplied to a corresponding diesel engine not equipped with EGR. The performance of a diesel engine with such cooling of the recirculating exhaust gases can thus substantially correspond to that of a combustion engine not equipped with EGR.

The invention is in no way limited to the embodiment described in the drawing but may be varied freely within the scopes of the claims. The possibility is thus not excluded of the recirculating exhaust gases being led directly into the inlet line without cooling and of the whole cooling of the exhaust gases together with the compressed air taking place in a charge cooler.

## Claims

1. An arrangement for recirculation of exhaust gases in a supercharged combustion engine (1) whereby the arrangement comprises an exhaust line (3) intended to lead exhaust gases out from the combustion engine (1), an inlet line (6) leading compressed air at above atmospheric pressure to the combustion engine (1), a return line (7) which comprises a connection to the exhaust line (3) and a connection to the inlet line (6), so that via the return line (7) it is possible to recirculate exhaust gases from the exhaust line (3) to the inlet line (6), and a second cooler (10) adapted to cooling the exhaust gases in the return line (7) by a liquid medium contained in a cooling system which is adapted to cooling the combustion engine (1), **characterised in that** the arrangement comprises a first cooler (12) arranged close to a cooler (14) for cooling the liquid medium in the cooling system, whereby the first cooler (12) is cooled by ambient air which flows first through the first cooler (12) before flowing through the cooler (14), and whereby the first cooler (12) is incorporated in the inlet line (6) downstream from the connection of the return line (7) to the inlet line (6) so that, when the exhaust gases are returned via the return line (7), said first cooler (12) cools a mixture of exhaust gases and air before the mixture is led to the combustion engine (1).

2. An arrangement according to any one of the foregoing claims, **characterised in that** the arrangement comprises an EGR valve (8) incorporated in the return line (7).

3. An arrangement according to claim 2, **characterised in that** the arrangement comprises a control unit (9) adapted to controlling the EGR valve (8).

4. An arrangement according to any one of the foregoing claims, **characterised in that** the arrangement comprises a turbine (4) driven by the exhaust gases in the exhaust line (3) which are not led into the return line (7), and a compressor (5) driven by said turbine (4) so that it compresses the air in the inlet line (6).

5. An arrangement according to any one of the foregoing claims, **characterised in that** the combustion engine (1) is a diesel engine or an Otto engine.

## Patentansprüche

1. Anordnung zur Rückführung von Abgasen in einem aufgeladenen Verbrennungsmotor (1), wobei die Anordnung umfasst:
eine Abgasleitung (3) zum Herausführen von Abgasen aus dem Verbrennungsmotor (1),
eine Zuführleitung (6), die verdichtete Luft über atmosphärischem Druck dem Verbrennungsmotor (1) zuführt,
eine Rückführleitung (7), die eine Verbindung zu der Abgasleitung (3) und eine Verbindung zu der Zuführleitung (6) aufweist, so dass es durch die Rückführleitung (7) möglich ist, Abgase von der Abgasleitung (3) der Zuführleitung (6) zuzuführen, und
einen zweiten Kühler (10), der zum Kühlen der Abgase in der Rückführleitung (7) mit einem in einem Kühlsystem enthaltenen, zum Kühlen des Verbrennungsmotors (1) ausgebildeten, flüssigen Medium ausgebildet ist,
**dadurch gekennzeichnet,**
**dass** die Anordnung einen ersten Kühler (12) umfasst, der nahe einem Kühler (14) zum Kühlen des flüssigen Mediums in dem Kühlsystem angeordnet ist, wobei der erste Kühler (12) mit Umgebungsluft gekühlt wird, die zuerst den ersten Kühler (12) durchströmt, bevor sie den Kühler (14) durchströmt, und wobei der erste Kühler (12) in der Zuführleitung (6) stromabwärts der Verbindung der Rückführleitung (7) zu der Zuführleitung (6) angeordnet ist, so dass dann, wenn die Abgase durch die Rückführleitung (7) zurückgeführt werden, der erste Kühler (12) eine Mischung aus Abgasen und Luft kühlt, bevor die Mischung dem Verbrennungsmotor (1) zugeführt wird.

2. Anordnung nach einem der vorangegangenen Ansprüche,
**dadurch gekennzeichnet, dass** die Anordnung ein in der Rückführleitung (7) angeordnetes AGR-Ventil (8) umfasst.

3. Anordnung nach Anspruch 2,
**dadurch gekennzeichnet, dass** die Anordnung eine zum Steuern des AGR-Ventils (8) ausgebildete Steuereinheit (9) umfasst.

4. Anordnung nach einem der vorangegangenen Ansprüche,
**dadurch gekennzeichnet, dass** die Anordnung eine durch die nicht der Rückführleitung (7) zugeführten Abgase in der Abgasleitung (3) angetriebene Turbine (4) und einen durch de Turbine (4) angetriebenen Verdichter (5) umfasst, so dass er die Luft in der zuführleitung (6) verdichtet.

5. Anordnung nach einem der vorangegangenen Ansprüche,
**dadurch gekennzeichnet dass** der Verbrennungsmotor (1) ein Dieselmotor oder ein Ottomotor ist.

## Revendications

1. Agencement pour la recirculation des gaz d'échappement dans un moteur à combustion suralimenté (1), lequel agencement comprend une conduite d'échappement (3) destinée à conduire les gaz d'échappement hors du moteur à combustion (1), une conduite d'entrée (6) conduisant de l'air comprimé à une pression supérieure à la pression atmosphérique jusqu'au moteur à combustion (1), une conduite de retour (7) qui comprend un raccord à la conduite d'échappement (3) et un raccord à la conduite d'entrée (6), de telle sorte qu'il soit possible de faire recirculer les gaz d'échappement de la conduite d'échappement (3) vers la conduite d'entrée (6), via la conduite de retour (7), et un deuxième refroidisseur (10) adapté pour refroidir les gaz d'échappement présents dans la conduite de retour (7) au moyen d'un milieu liquide contenu dans un système de refroidissement qui est adapté pour refroidir le moteur à combustion (1), **caractérisé en ce que** l'agencement comprend un premier refroidisseur (12) placé à proximité d'un refroidisseur (14) pour refroidir le milieu liquide dans le système de refroidissement, le premier refroidisseur (12) étant refroidi par l'air ambiant qui s'écoule d'abord à travers le premier refroidisseur (12) avant de s'écouler à travers le refroidisseur (14), et le premier refroidisseur (12) étant incorporé dans la conduite d'entrée (6) en aval du raccord de la conduite de retour (7) à la conduite d'entrée (6), de telle sorte que, lorsque les gaz d'échappement sont ramenés via la conduite de retour (7), le premier refroidisseur (12) refroidisse un mélange de gaz d'échappement et d'air avant que le mélange soit conduit au moteur à combustion (1).

2. Agencement selon l'une quelconque des revendications précédentes, **caractérisé en ce que** l'agencement comprend une vanne EGR (8) incorporée dans la conduite de retour (7).

3. Agencement selon la revendication 2, **caractérisé en ce que** l'agencement comprend une unité de commande (9) adaptée pour commander la vanne EGR (8).

4. Agencement selon l'une quelconque des revendications précédentes, **caractérisé en ce que** l'agencement comprend une turbine (4) entraînée par les gaz d'échappement présents dans la conduite d'échappement (3) qui ne sont pas introduits dans la conduite de retour (7), et un compresseur (5) entraîné par ladite turbine (4) de façon à comprimer l'air présent dans la conduite d'entrée (6).

5. Agencement selon l'une quelconque des revendications précédentes, **caractérisé en ce que** le moteur à combustion (1) est un moteur Diesel ou un moteur Otto.
